# EUROPEAN PATENT SPECIFICATION

(11) **EP 0 948 192 B1**
(45) Date of publication and mention of the grant of the patent: **20.07.2005**
(21) Application number: 99106501.2
(22) Date of filing: 30.03.1999
(51) Int. Cl.: H04N 1/401, H04N 1/40

(54) **Image recording apparatus**
Bildaufzeichnungsgerät
Appareil d'enregistrement d'image

(30) Priority: 01.04.1998 JP 8849798
(43) Date of publication of application: 06.10.1999
(73) Proprietor: NORITSU KOKI CO., LTD., Wakayama-shi, Wakayama (JP)
(72) Inventor: Tanibata, Toru, Wakayama-shi, Wakayama (JP)
(74) Representative: Müller-Boré & Partner Patentanwälte

(56) References cited:
- EP-A- 0 501 334
- EP-A- 0 772 341
- DE-A- 19 643 135
- US-A- 5 018 155
- US-A- 5 258 248
- PATENT ABSTRACTS OF JAPAN vol. 016, no. 232 (M-1256), 28 May 1992 (1992-05-28) & JP 04 047958 A (SEIKO EPSON CORP), 18 February 1992 (1992-02-18)

## Description

The present invention relates to an image recording apparatus provided with an exposing head for controlling an exposure to a printing paper as a photosensitive material in accordance with an image signal, and particularly to an image recording apparatus which can correct nonuniformities in exposure light amounts among light output portions of the exposing head. The present invention also relates to a method for recording images.

Various image recording apparatuses, which are called digital line exposure devices, have been proposed. This type of image recording apparatuses record images on a printing paper by taking images on a film or the like as image data, and expose a printing paper to light in accordance with the obtained image data

An exposure control in such an image recording apparatus is usually performed by an exposure unit. The exposure unit is comprised of, for example, an exposing head, a light source and an optical fiber bundle for introducing a light from the light source to the exposing head. The exposing head is provided with shutter portions (light output portions) for individually controlling pixels (dots), which are linearly arranged in a direction (widthwise direction of the printing paper) normal to a transport direction of the printing paper, so as to allow and block the transmission of the light.

In the construction as above, when a drive voltage corresponding to the image data is applied to the shutter portion in a position corresponding to a desired pixel, this shutter portion is opened and the light from the light source having been introduced to the shutter portion is emitted toward the printing paper, thereby exposing the printing paper. In this way, a desired pixel image can be recorded.

In the above image recording apparatus, light output characteristics of the respective shutter portions of the exposing head change with time. This results from, for example, deterioration and exchange of the light source, a partial variation in the transmittance of the optical fiber bundle, and a reduction in the function of the exposing head. Upon an occurrence of such a change in the light output characteristic with time, a variation of exposure light amounts among the respective shutter portions becomes larger and an exposure quality is reduced, with the result that the image cannot be strictly reproduced.

Accordingly, in the known image recording apparatuses, a sensor for measuring the exposure light amounts of the respective shutter portions is provided in a position facing the exposing head so as to enable scanning along a direction in which the respective shutter portions are aligned. Based on the measurement value of the sensor, a shutter opening time can be, for example, adjusted for each shutter portions. In other words, with this construction, even if the light output characteristic of the exposing head changes with time, a reduction in the image quality can be avoided by correcting the exposure light amounts based on the measurement result of the sensor.

Alternatively, there is a method according to which an original scanner of high resolution is provided instead of the above sensor and, after a solid image of single color is recorded on the entire surface of a printing paper, this printing paper is scanned by the original scanner, and an exposure light amount is corrected in accordance with the scanned result of the original scanner. According to this method, a test chart in which the respective shutter portions and the pixel positions of the printing paper have a one-on-one correspondence may be recorded by an exposure and used as a printing paper for scanning.

Generally, a depth of focus is small in the digital line exposure device. Thus, in order to maintain a good exposure quality of the exposing head, a displacement of the printing paper in a focusing direction (direction normal to an image recording surface of the printing paper) is permissible in a range of ± 0.05 mm. Accordingly, in the construction in which the sensor is provided opposite to the exposing head, not a low-precision sensor having a scanning displacement of e.g. 1.00 mm (±0.50 mm: this means a displacement range of 1.00 mm displaced ±0.50 mm from a proper scanning position. This definition holds for similar expressions used hereafter.), but a sensor of very high precision having a scanning displacement of 0.10 mm (±0.05 mm) or smaller, preferably 0.04 mm (±0.02 mm) or smaller is required to have a very high precision. It should be noted that the scanning displacement is a kind of index indicating the precision of a sensor and is actually a displacement of the sensor during scanning in the above normal direction.

Here, if the exposing head can deal with up to printing papers having a width of 305 mm which is becoming a mainstream, a scanning distance of the sensor needs to be 305 mm or longer. However, the longer the scanning distance, the more difficult it generally becomes to cause the sensor to scan while maintaining a scanning displacement of 0.1 mm (± 0.05 mm). Even if such scanning can be realized, the production of the apparatus becomes complicated, which causes an increase in the price of the apparatus. Thus, having a low cost scanning in mind, it is reasonable to use a sensor having a scanning displacement of 1.00 mm (± 0.50 mm).

The construction using the sensor having a scanning displacement of 1.00 mm (± 0.50 mm) has the following problem.

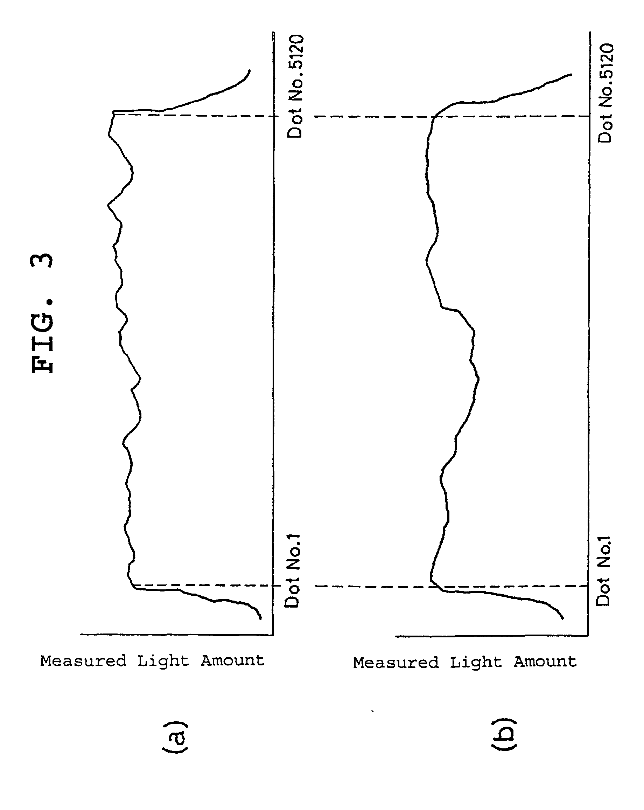

FIG. 3(a) shows an exemplary measurement curve when the exposure light amounts of the respective shutter portions were measured by a sensor having a scanning displacement of 0.04 mm (± 0.02 mm), whereas FIG. 3(b) shows an exemplary measurement curve when they were measured by a sensor having a scanning displacement of 1.00 mm (± 0.50 mm). The exposing head has an exposure resolution of 400 DPI (dots per inch) and includes, for example, 5120 light output portions so as to be able to deal with printing paper having a width of 305 mm and in view of an error in the width of the printing paper. It should be noted that Dot No. 1 and Dot No. 5120 correspond to the shutter portions located at the opposite ends of the linearly arranged shutter portions of the exposing head.

As can be seen from FIGS. 3(a) and 3(b), in a portion which can be judged as having substantially proper exposure light amounts by the sensor having the scanning displacement of 0.04 mm (± 0.02 mm), the exposure light amounts may be judged to be insufficient by the sensor having the scanning displacement of 1.00 mm (± 0.50 mm) due to a displacement of the sensor. In such a case, a controller generates a correction value in a direction to increase the exposure light amount, i.e. a correction value different from a correction value actually needed.

Accordingly, the exposure correction cannot be accurately performed with the construction using the sensor having the scanning displacement of 1.00 mm (±0.50 mm), resulting in a problem that prints of high quality cannot be obtained.

On the other hand, in the case that the exposure correction is performed by providing a high-resolution original scanner, it is necessary to use a scanner having a resolution at least higher than the exposure resolution of the exposing head as the original scanner. It is empirically known that a scanner having a resolution five times that of the exposure resolution must be used in order to obtain a satisfactory correction value. In other words, an original scanner having a resolution of 2000 DPI or higher is needed in the case that the exposure resolution of the exposing head is 400 DPI.

However, since such a high-resolution original scanner is expensive, the price of the image recording apparatus disadvantageously becomes too expensive if the exposure correction is performed using this method.

As a further example, EP-A-0 850 769 relates to a method of compensating uneven output in a printing head employing an array of printing elements, wherein the compensation data are obtained by measuring the uncompensated output value of each printing element, calculating a target value for each printing element and determining a compensation value from the difference between the measured output value and the target value.

In order to overcome the above problems residing in the prior art, an object of the present invention is to provide an image recording apparatus which can accurately correct exposure light amounts even if a sensor of relatively low precision having a relatively longer scanning displacement and, as a result, can be manufactured at a reduced price. It is also the object of the present invention to provide a corresponding method for recording images.

This object is solved by an image recording apparatus according to claim 1 and by a method for recording images according to claim 5. Preferred embodiments are subject of the dependent claims.

According to the invention, there is provided an image recording apparatus for recording an image on a photosensitive material, which is not in contact with an exposing head, by driving light output portions of the exposing head in accordance with an image signal to control the transmission of light, comprising:
an exposure measuring means provided in a position opposite to the exposing head for measuring exposure light amounts of the respective light output portions, and
an exposure correcting means for correcting the exposure light amounts of the respective light output portions, characterized by
a storage means for storing correction reference exposure light amounts measured by the exposure measuring means immediately after a first exposure correction, which first exposure correction is performed by the exposure correction means using measurement results obtained by scanning a finished print using a high-precision original scanner installed outside the image recording apparatus,
wherein the exposure correcting means corrects the exposure light amounts of the respective light output portions based on a comparison of the exposure light amounts measured by the exposure measuring means with the correction reference exposure light amounts stored in the storage means, and
wherein the exposure measuring means has a precision lower than said exposing head and the correction reference exposure light amounts are set according to the precision of the exposure measuring means, where the precision of the measuring means is related to its displacement relative to the exposing head in a focusing direction of the exposing head.

With this construction, the respective light output portions of the exposing head are driven in accordance with the image signal. Rays of light having transmitted through the driven light output portions reach the photosensitive material, thereby recording an image on the photosensitive material.

The light output characteristics of the light output portions change with time by being influenced by, e.g. deterioration of a light source. However, the exposure correcting means corrects the exposure light amounts of the light output portions to reduce and preferably eliminate nonuniformities and variations in the exposure light amounts of the light output portions resulting from the change in the light output characteristics with time. As a result, a highly minute image can be recorded on the photosensitive material.

Generally, in the case that the measurement result of the exposure measuring means for a specific light output portion indicates a shortage of the exposure light amount, this measurement result can be relied on if the exposure measuring means is of high precision. However, if the exposure measuring means is of low precision, it cannot be distinguished whether the measurement result really indicates a shortage or, despite a proper exposure, the exposure light amount cannot be accurately measured due to the low precision of the exposure measuring means. This compelled the prior art to use the exposure measuring means of high precision, which led to an increased price of the apparatus.

However, in the inventive construction, the exposure correcting means corrects the exposure light amounts based on the comparison of the exposure light amounts measured by the exposure measuring means (basic exposure light amounts) with the correction reference exposure light amounts stored in the storage means. Accordingly, even if the exposure measuring means cannot accurately measure the exposure light amounts due to, e.g. its insufficient precision, whether or not the exposure light amount is insufficient in the specific light output portion can be accurately and easily judged by comparing the measurement result with the correction reference exposure light amount. Further, since the exposure correction is performed based on the correction reference exposure light amounts, it can be more accurately performed as compared to the case where it is performed based on the measurement result.

Accordingly, in the inventive construction, the exposure light amounts can be accurately corrected even if the exposure measuring means is constructed by a relatively inexpensive device of relatively low precision. As a result, the price of the apparatus can be reduced by using an inexpensive sensor.

Further, since the correction reference exposure light amounts are constantly stored in the storage means, it is not necessary to obtain them using a high-resolution original scanner every time the correction is performed. This obviates the need for constantly providing the expensive original scanner in the apparatus. From this reason as well, the price of the apparatus can be reduced.

Further, the correction reference exposure light amounts are set according to the precision of the exposure measuring means.

With this construction, the exposure correction can be securely performed regardless of the precision of the exposure measuring means used since the correction reference exposure light amounts are set according to the precision of the exposure measuring means. Thus, the exposure measuring means can be constructed by devices having various levels of precision. This results in a larger variation of the apparatus, thereby enabling a user to select the apparatus from a wider range.

Preferably, the correction reference exposure light amounts are exposure light amounts measured by the exposure measuring means immediately after the exposing head performs an exposure with exposure light amounts corrected in advance by the exposure correcting means based on an image density of the image recorded on the photosensitive material.

With this construction, the change in the light output characteristics of the light output portions with time hardly occurs within a short period which elapses until the exposure measuring means measures the exposure light amounts after the exposing head performs an exposure with the exposure light amounts corrected in advance by the exposure correcting means. Accordingly, the correction reference exposure light amounts having high reliability as correction references can be obtained regardless of the precision of the exposure measuring means. As a result, the exposure light amounts can be more accurately corrected.

Preferably, the exposure correcting means corrects the exposure light amounts of the respective light output portions such that the exposure light amounts measured by the exposure measuring means agree with the correction reference exposure light amounts stored in the storage means.

With this construction, since the exposure light amounts are corrected such that those measured by the exposure measuring means agree with the correction reference exposure light amounts, nonuniformity and variation in the exposure light amount among the light output portions can be almost held down and preferably completely eliminated even if the light output characteristics change with time. As a result, the photosensitive material can be more uniformly exposed to secure the formation of an image of higher quality.

Preferably, the exposing head comprises a PLZT (lead lanthanum zirconate titanate) device.

Since the PLZT device has both a high light transmitting property (and a high light transmission ratio) and an electrooptic effect of changing its index of birefringence upon application of a voltage, and has a higher exposing ability than, for example, a light-emitting diode, liquid crystal, a fluorescent display tube. Therefore, highly minute dots can be formed by constructing the exposing head by the PLZT device.

According to the invention, there is provided a method for recording an image on a photosensitive material using an image recording apparatus comprising an exposure correcting means for correcting exposure light amounts of respective light output portions of an exposing head thereof, the method comprising the following steps :
acquiring correction value data for correcting exposure light amounts of the respective light output portions to correspond to predetermined optimum exposure light amounts;
adjusting the exposure correcting means in accordance with the correction value data;
measuring basic exposure light amounts of the respective light output portions using an exposure measuring means incorporated into the image recording apparatus in a position opposite to the exposing head, **characterized in that**:
   the correction value data is obtained by:
      performing a first exposure correction using measurement results obtained by scanning a finished print using a high-precision original scanner installed outside the image recording apparatus;
      acquiring and storing, as the correction value data, correction reference exposure light amounts for the respective light output portions measured by the exposure measuring means immediately after the first exposure correction;
      setting the correction reference exposure light amounts according to the precision of the exposure measuring means, where the precision of the measuring means is related to its displacement relative to the exposing head in a focusing direction of the exposing head;
      one or more images are recorded on the photosensitive material, wherein the exposure measuring means has a precision lower than said original scanner and the exposure light amounts are adjusted in accordance with a comparison of the previously measured basic exposure light amounts with the correction reference exposure light amounts.

Preferably, the image recording apparatus used for the inventive method is an inventive image recording apparatus as described above.

According to a preferred embodiment, the correction value data are determined in accordance with a measured image density of the image recorded on the photosensitive material.

The image density is preferably measured using a high-precision original scanner installed outside the image recording apparatus, e.g. at a manufacturer.

Preferably, the correction reference exposure light amounts are basic exposure light amounts measured by the exposure measuring means.

After completion of steps (a) to (d), it is preferred that only step (e) is repeated for recording further images on the photosensitive material (4), and step (d) is repeated as required from time to time for newly measuring basic exposure light amounts.

Therefore, during normal operation of the image recording apparatus, only step (e) will be repeatedly performed. However, it might be necessary to re-measure from time to time the basic exposure light amounts in order to take, e.g., changes in the light output characteristics of the light output portions into account.

These and other objects, features and advantages of the present invention will become more apparent upon a reading of the following detailed description and accompanying drawings in which:
FIG. 1 is a diagram showing the schematic construction of an image recording apparatus according to one embodiment of the invention,
FIG. 2(a) is a graph showing a distribution of correction reference exposure light amounts of shutter portions stored in a memory of the image recording apparatus, and FIG. 2(b) is a graph showing a distribution of exposure light amounts of the respective shutter portions measured by a sensor after light output characteristics of the respective shutter portions changed with time, and
FIGS. 3(a) and 3(b) are graphs showing exemplary distributions of exposure light amounts of the respective shutter portions measured by a sensor having a scanning displacement of 0.04 mm (± 0.02 mm), and by a sensor having a scanning displacement of 1.00 mm (± 0.50 mm).

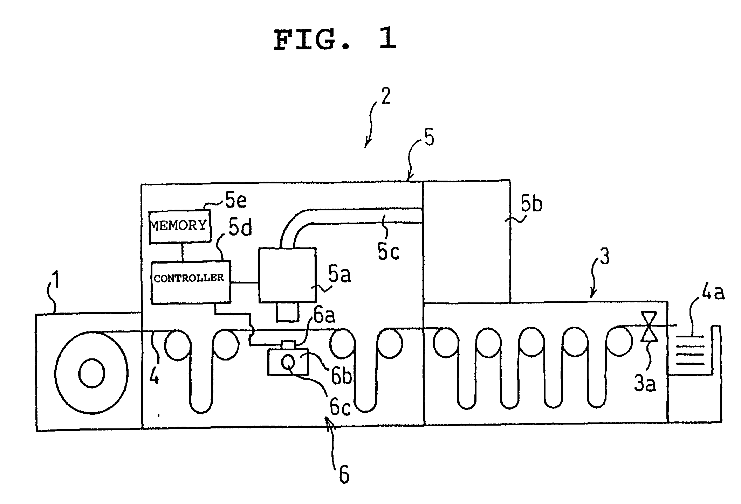

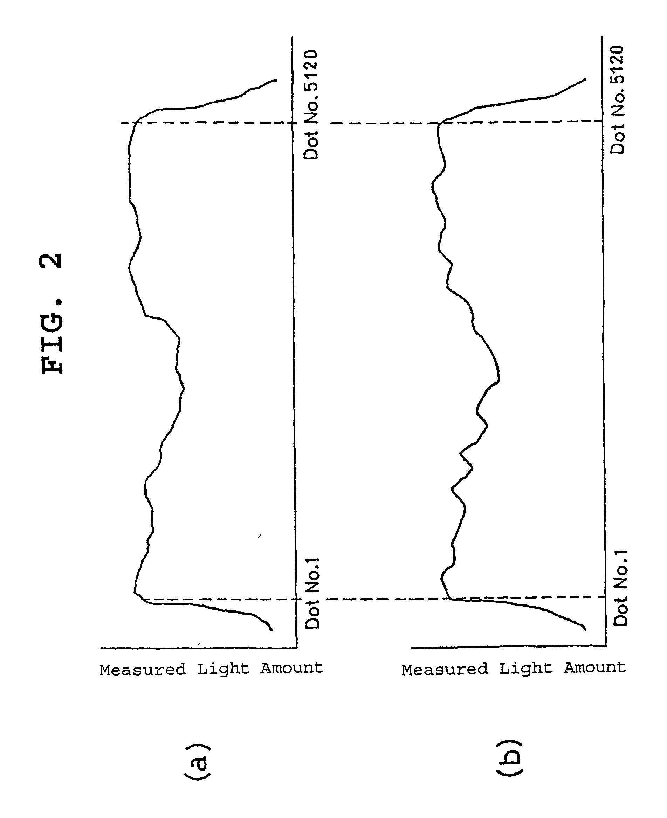

One embodiment of the invention is described with reference to FIGS. 1 and 2.

An image recording apparatus according to the invention is provided with a magazine 1, an image recording unit 2 and a processing unit 3 as shown in FIG. 1.

The magazine 1 is a printing paper container for containing a roll of unexposed and undeveloped printing paper 4 (photosensitive material), and the contained printing paper 4 is fed to an exposure position inside the image recording unit 2.

The image recording unit 2 is comprised of an exposure device 5 for exposing the printing paper 4 fed to the exposure position to form an image thereon and a measuring device 6 for measuring exposure light amounts of light output portions of a PLZT (lead lanthanum zirconate titanate) head 5a of the exposure device 5 to be described later. The detailed construction of the image recording unit 2 is described later.

The processing unit 3 is provided with a developing assembly and a drying assembly. The developing assembly includes several treatment liquid tanks containing each a color developer, a bleaching liquid, a fixer and a stabilizer. The printing paper 4 having images formed thereon in the exposure device 5 is developed by being successively immersed in the respective treatment liquids. The drying assembly dries the printing paper 4 processed by the developing assembly.

The processing unit 3 includes a cutter 3a for cutting the printing paper 4 dried by the drying assembly frame by frame, and the cut pieces of printing paper 4 are discharged from the apparatus as finished prints 4a.

Next, the image recording unit 2 is described in detail.

As shown in FIG. 1, the exposure device 5 of the image recording unit 2 is at least comprised of the PLZT head 5a (exposing head), a light source 5b, an optical fiber bundle 5c for introducing a light from the light source 5b to the PLZT head 5a, a controller 5d (exposure correcting means) and a memory 5e (storage means).

The PLZT head 5a is constructed such that a PLZT device made from a transparent ceramic material having a strong dielectric property is arranged between a pair of polarizing plates (a polarizer and an analyzer, e.g. polarization analyzer). The PLZT device is a solid solution containing (Pb₁₋ₓLaₓ)(Zr_{y}Ti_{1-y})_{1-x/4}O₃ obtained by adding lanthanum to a solid solution (PZT) of lead zirconate (PbZrO₃) and lead titanate (PbTiO₃) at a suitable ratio and hot-pressing the resultant.

This PLZT head 5a is provided with shutter portions (light output portions) for controllably transmitting and blocking rays of light from the light source 5b. The respective shutter portions are linearly arranged in a direction (widthwise direction of the printing paper 4) normal to a transport direction of the printing paper 4. In this embodiment, the exposure resolution of the PLZT head 5a is 400 DPI. For example, 5120 shutter portions are provided so that the printing paper 4 having a width of 305 mm (approx. 12 inches) can be easily dealt with and in view of an error in the width of the printing paper 4. This number is more than 4800 which is simply calculated by 400 x 12. To the PLZT head 5a is sent an image data of 5120 dots.

Such a PLZT head 5a has both a high light transmitting property and an electrooptic effect of changing an index of birefringence upon application of a voltage. Accordingly, if a drive voltage corresponding to the image data is applied to the shutter portion in a position corresponding to a desired pixel, a polarized state of the light ray linearly polarized by the polarizer undergoes a change when passing through the PLZT device, and light components coinciding with a polarizing plane of the analyzer emerge from the analyzer to expose the printing paper 4.

Although the exposing head is comprised of the PLZT device in this embodiment, it may be, of course, comprised of an LED (light-emitting diode) array, liquid crystal, a fluorescent display tube, or the like. However, since the PLZT device has a better exposing ability than the other devices, highly minute dots can be formed. Additional advantages of the PLZT device are: a very high response speed, as high a ratio of the light transmission when it is high to that when it is low as 2000:1 (light transmission ratio), the use in a wide temperature range and a long lifetime. Since the LED array is itself a light emitting element, it is not necessary to separately provide the light source if this is applied to the exposing head. As a result, the construction can be simplified. However, since there is a variation in light intensity among the respective devices of R, G, B (red, green, blue), an exposure control taking such a variation in consideration needs to be performed in order to obtain a high quality print. Although liquid crystals are not suitable for the line exposure since they have a slow response speed, it is not impossible to apply them to the exposing head.

The light source 5b is, for example, a white light source, and a disk-shaped color filter (not shown) having three color areas of R, G, B is provided at the side of the light source 5b toward the optical fiber bundle 5c. Accordingly, chromatic color light rays of R, G, B are successively projected onto one pixel line of the printing paper 4 by the light from the light source 5b transmitting through the disk-shaped filter. Thereafter, exposure for three colors are performed line by line.

The controller 5d drives the respective shutter portions of the PLZT head 5a in accordance with the image data transmitted from an original scanner or an unillustrated personal computer outside the apparatus, and controls the opening times of the respective shutter portions of the PLZT head 5a in order to adjust an exposure light amount of the PLZT head 5a so that a distribution of exposure light amounts measured by a sensor 6a (to be described later) agree with the distribution of the correction reference exposure light amounts stored in the memory 5e.

The memory 5e is adapted to store, for example, exposure light amounts measured by the sensor 6a immediately after the first exposure correction, for example, after the shipment of the apparatus as correction reference exposure light amounts. Thus, the correction reference exposure light amounts are set in accordance with the scanning displacement of the sensor 6a and defers depending on the precision of the sensor used.

Specifically, in the present invention, a sensor having a scanning displacement of 1.00 mm (± 0.5 mm) is used as the sensor 6a. Even when a sensor having a larger scanning displacement is used, correction reference exposure light amounts corresponding to this scanning displacement are set and stored in the memory 5e. Thus, it is, of course, possible to use the sensor 6a whose scanning displacement is other than 1.00 mm (± 0.50 mm). This results in an increased variation of the apparatus and enables a user to select the apparatus from a wider range.

Here, the first exposure correction after the shipment of the apparatus is performed by scanning a finished print by a high-precision original scanner installed at a manufacturer and feeding the measurement result (correction value data) back to the controller 5d. Therefore, in the present invention, it is not necessary to provide an expensive high-precision original scanner in the apparatus.

Although unillustrated, a condenser lens for focusing the light transmitted through the PLZT head 5a on the printing paper 4 is provided at the side of the PLZT head 5a toward the printing paper 4. This condenser lens is such that a plurality of small lenses corresponding to a plurality of shutter portions (not in one-on-one correspondence with the shutter portions) are linearly aligned along the widthwise direction of the printing paper 4. The use of such a condenser lens enables a non-contact arrangement of the PLZT head 5a and the printing paper 4.

For example, in a contact type arrangement in which an exposing head and a photosensitive material are held in contact as in a flat CRT (cathode-ray tube), light rays emerging from the exposing head cannot directly be scanned by a sensor provided opposite to the exposing head for the following reason. Specifically, in the contact type arrangement, exposure light can be focused only when the exposing head and the photosensitive material are in contact with each other. Thus, in order for the sensor to scan the output light of the exposing head with the exposure light being focused, the sensor needs to be brought into direct contact with the exposing head. However, in such a case, both the exposing head and the sensor may end up being damaged. As a result, the output light cannot be directly scanned in the contact type arrangement.

In the non-contact type arrangement as in the present invention, the sensor can securely measure the output light without damaging the exposing head and the sensor.

Next, the construction of the measuring device 6 is described.

The measuring device 6 is provided in a position opposite to the exposing device 5 while holding the printing paper 4 therebetween, and comprised of the sensor 6a (exposure measuring means), a sensor mount 6b and a ball screw 6c.

The sensor 6a measures an amount of light transmitted through the PLZT head 5a and rests on the sensor mount 6b. The sensor 6a according to this embodiment is a sensor having a scanning displacement of 1.00 (± 0.50 mm) and is less expensive than those having scanning displacements of 0.04 (± 0.02 mm) and 0.10 (± 0.05 mm). The measurement result of the sensor 6a is fed to the controller 5d. It should be noted that the scanning displacement of the sensor 6a does not change with time unlike the light output characteristic of the PLZT head 5a.

The sensor mount 6b is movable along the widthwise direction of the printing paper 4 as the ball screw 6c provided along this widthwise direction is rotated. Accordingly, the sensor 6a is enabled to scan the respective shutter portions of the PLZT head 5a along the widthwise direction by the rotation of the ball screw 6c.

Next, the operation of the image recording apparatus according to the invention is described. This operation is roughly divided into an operation of obtaining correction reference exposure light amounts and an operation of correcting the exposure light amounts based on the obtained correction reference exposure light amounts. First, the operation of obtaining the correction reference exposure light amounts is described.

First, the printing paper 4 is fed to the exposure position. The controller 5d drives the respective shutter portions of the PLZT head 5a in accordance with the image data and the printing paper is exposed to the light from the light source 5b introduced via the optical fiber bundle 5c, thereby forming a solid image of single color on the entire surface of the printing paper 4. It is desirable to provide this solid image of single color with markings every, e.g. 100 dots in order to enable the recognition of the respective shutter positions (dot positions).

Subsequently, the printing paper 4 bearing the solid image is conveyed to the processing unit 3, in which development, drying and like necessary processing are applied. Then, one frame of the solid image is cut off by the cutter 3a. Thereafter, an image density of one frame of the solid image is scanned by a high-precision original scanner which is installed outside the apparatus, for example, at a manufacturer. If the original scanner recognizes a pixel having an insufficient exposure light amount, data such as the position of this pixel and a shortage of the exposure light amount are transmitted to the controller 5d. Upon receipt of the data (correction value data), the controller 5d performs, in subsequent printing operations, such a control as to, for example, extend an opening time of the shutter portion corresponding to the pixel position of the PLZT head 5a by a time necessary to avoid the shortage of the exposure light amount. In this way, nonuniformity and variation of the exposure light amount among the respective shutter portions are first corrected.

The aforementioned exposure light amount correction may be performed by a manufacturer at latest before the apparatus is shipped. Unless this correction is made before shipment, a user may bring the apparatus to the manufacturer or may do so himself by connecting an original scanner as above with the apparatus. A most efficient way would be such that the user sends a solid image printed by him to the manufacturer, who then makes a correction (calculate correction value data) based on the received image.

Subsequently, the controller 5d drives the respective shutter portions of the PLZT head 5a using the above correction value data, and causes the ball screw 6c to rotate, thereby causing the sensor 6a to scan in the direction in which the shutter portions are aligned. As a result, the sensor 6a measures the exposure light amounts of the shutter portions. A distribution of the exposure light amounts of the respective shutter portions obtained by the sensor 6a is shown in FIG. 2(a). It should be noted that Dot No. 1 and Dot No. 5120 correspond to the shutter portions located at the opposite ends of the linearly aligned shutter portions of the PLZT head 5a.

If judged from FIG. 2(a), there seems to be a variation in the exposure light amounts of the respective shutter portions. However, in fact, there is hardly a variation in the exposure light amounts. This is because a measurement curve shown in FIG. 2(a) is obtained immediately after the exposure light amounts are corrected based on the measurement result of the original scanner, and a change in the light output characteristic with time will not occur within a short period which elapses until the sensor 6a first measures the exposure light amounts after the above correction is performed. Further, with a sensor 6a having a longer scanning displacement, such a variation in the exposure light amounts as shown in FIG. 2(a) is seen, as a matter of fact, even if the exposure light amounts hardly vary.

Accordingly, in this embodiment, a measurement curve of FIG. 2(a) obtained by the sensor 6a is stored in the memory 5e as a distribution of correction reference exposure light amounts. At this time, the correction reference exposure light amounts are set according to the precision of the sensor 6a. Thereafter, the user corrects the exposure light amounts based on the distribution of correction reference exposure light amounts, for example, every time the apparatus is started.

Next, the operation of correcting the exposure light amounts based on the obtained correction reference exposure light amounts is described below. Here, it is assumed that a time long enough for the light output characteristics of the shutter portions of the PLZT head 5a to change with time due to the deterioration of the light source 5b and/or other causes has elapsed until the exposure light amounts are corrected after the correction reference exposure light amounts was obtained.

First, before recording an image by exposing usual printing paper 4 to light, the controller 5d drives the respective shutter portions of the PLZT head 5a using the correction amounts, with which the exposure light amounts were corrected for the first time using the aforementioned original scanner. The sensor 6a is caused to scan the shutter portions in the direction of their alignment, thereby measuring the exposure light amounts of the shutter portions. A distribution of the exposure light amounts of the respective shutter portions obtained by the sensor 6a is shown in FIG. 2(b). Such a measurement curve is transmitted to the controller 5a as a data.

Subsequently, the controller 5d drives the shutter portions such that the measurement curve shown in FIG. 2(b) agree with the one shown in FIG. 2(a) stored in the memory 5e. Specifically, on the basis of the measurement curve of FIG. 2(a), the controller 5d adjusts the opening time of each shutter portion whose measured exposure light amount in FIG. 2(b) differs from that in FIG. 2(a), thereby causing the measured light amount of this shutter portion to agree with the correction reference exposure light amount of FIG. 2(a). Upon completion of the correction of the exposure light amounts based on the correction reference exposure light amounts, a usual printing operation is performed with the exposure light amounts thus corrected from that time on.

Specifically, usual printing paper 4 is set in the magazine 1 and fed to the exposure position. Then, the controller 5d drives the shutter portions of the PLZT head 5a based on an image data transmitted from an unillustrated personal computer or the like in such a manner that the resulting exposure light amounts agree with the correction reference exposure light amounts. As a result, the printing paper 4 is exposed to light. Accordingly, in this case, highly minute dots are formed on the printing paper 4 by setting the proper exposure light amounts, despite the fact that the output light characteristics of the shutter portions of the PLZT head 5a have changed with time. The printing paper 4 having the image formed thereon by this exposure is then conveyed to the processing unit 3 to be developed and dried. Thereafter, the processed printing paper is finished into prints 4a after being cut frame by frame by the cutter 3a.

As described above, in the case of using the sensor 6a having a larger scanning displacement, a shortage of the exposure light amount in the specific shutter portion can be properly recognized by the comparison of the measurement result of the sensor 6a with the correction reference exposure light amounts set according to the precision of the sensor 6a, even if the exposure light amounts cannot be accurately measured due to an insufficient precision of the sensor 6a. Thus, the exposure light amounts can be securely corrected based on this recognition. Further, since the correction is made based on the correction reference exposure light amounts, the exposure light amounts can be more accurately corrected as compared to the case where the exposure light amounts are correction only based on the measurement result.

Therefore, according to the embodiment of the present invention, the exposure light amounts can be accurately corrected even if the sensor 6a is a relatively inexpensive sensor of relatively low precision. As a result, the price of the apparatus can be reduced by using an inexpensive sensor 6a.

Further, since the obtained correction reference exposure light amounts can be stored in the memory 5e, it is not necessary to obtain them using the original scanner every time the correction is performed. This obviates the need for constantly providing the original scanner in the apparatus. From this reason as well, the price of the apparatus can be reduced according to the present invention.

Since the correction reference exposure light amounts are obtained by the sensor 6a immediately after the exposure light amounts are accurately corrected using the high-precision scanner, they are highly reliable as a correction reference regardless of whether the scanning displacement of the sensor 6a is large or small. Thus, the exposure light amounts can be more accurately corrected by performing the correction based on the highly reliable correction reference exposure light amounts.

Further, since the controller 5a corrects the exposure light amounts such that the exposure light amounts measured by the sensor 6a agree with the correction reference exposure light amounts, nonuniformity and variation of the exposure light amounts among the shutter portions can be almost held down even if the light output characteristics change with time. As a result, the printing paper 4 is even more uniformly exposed to light, ensuring an image of higher quality. The above effect can be sufficiently obtained even if the above correction is performed such that the exposure light amounts measured by the sensor 6a not perfectly, but substantially agree with the correction reference exposure light amounts.

Although the exposure light amounts are corrected by adjusting the opening times of the respective shutter portions in the foregoing embodiment, it can be done also by adjusting the intensity of the light source 5b. The substantially same effects as the foregoing embodiment can be obtained also in this case. However, the method for adjusting the intensity of the light source 5b enables an adjustment of the exposure light amount of the entire head, but not an adjustment of the exposure light amount per dot.

Although the correction reference exposure light amounts used are the exposure light amounts measured by the sensor 6a immediately after the PLZT head 5a performed an exposure with the exposure light amounts corrected by the controller 5d based on the measurement result of the original scanner in the foregoing embodiment, a timing at which the correction reference exposure light amounts are set is not limited to the above timing. In other words, the correction reference exposure light amounts may be set in consideration of a time required for the light output characteristic of the PLZT head 5a to change with time. For example, if the light output characteristic would not change even upon the elapse of one hour after the apparatus was started, the exposure light amounts measured upon the elapse of one hour after the correction using the original scanner might be used as correction reference exposure light amounts.

According to the foregoing embodiment, a color image corresponding to the image data is recorded on the printing paper 4 by arranging a disk-shaped color filter between the light source 5b and the PLZT head 5a and adjusting the color of the light to be incident on the PLZT head 5a before the incidence. However, the present invention is also applicable to a construction in which the PLZT head 5a is caused to also function as a color filter for substantially transmitting only light components having specific wavelengths by applying drive voltages corresponding to the respective colors to the respective shutter portions of the PLZT head 5a.

As described above, the inventive image recording apparatus comprises the storage means for storing the correction reference exposure light amounts, and the exposure correcting means thereof corrects the exposure light amounts of the light output portions based on the comparison of the exposure light amounts measured by the exposure measuring means with the correction reference exposure light amounts stored in the storage means.

Accordingly, even if the exposure measuring means cannot accurately measure the exposure light amounts due to, e.g. its low precision, whether or not the exposure light amount is insufficient in the specific light output portion can be accurately and easily judged by comparing the measurement result with the correction reference exposure light amount. Further, since the exposure light amounts are corrected based on the correction reference exposure light amounts, the correction can be more accurately performed as compared to the case where it is performed only based on the measurement result.

### LIST OF REFERENCE NUMERALS

- 1: Magazine
- 2: Image Recording Unit
- 3: Processing Unit
- 3a: Cutter
- 4: Printing Paper (Photosensitive Material)
- 4a: Finished Print
- 5a: PLZT Head (Exposing head)
- 5b: Light Source
- 5c: Optical Fiber Bundle
- 5d: Controller (Exposure Correcting Means)
- 5e: Memory (Storage Means)
- 6: Measuring Device
- 6a: Sensor (Exposure Measuring Means)
- 6b: Sensor Mount
- 6c: Ball Screw
- 6d: Memory (Storage Means)

## Claims

1. An image recording apparatus (2) for recording an image on a photosensitive material (4), which is not in contact with an exposing head (5a), by driving light output portions of the exposing head (5a) in accordance with an image signal to control the transmission of light, comprising:
an exposure measuring means (6a) provided in a position opposite to the exposing head (5a) for measuring exposure light amounts of the respective light output portions, and
an exposure correcting means (5d) for correcting the exposure light amounts of the respective light output portions, **characterized by**
a storage means (5e) for storing correction reference exposure light amounts measured by the exposure measuring means immediately after a first exposure correction, which first exposure correction is performed by the exposure correction means using measurement results obtained by scanning a finished print using a high-precision original scanner installed outside the image recording apparatus,
wherein the exposure correcting means (5d) corrects the exposure light amounts of the respective light output portions based on a comparison of the exposure light amounts measured by the exposure measuring means (6a) with the correction reference exposure light amounts stored in the storage means (5e), and
wherein the exposure measuring means (6a) has a precision lower than said exposing head (5a) and the correction reference exposure light amounts are set according to the precision of the exposure measuring means (6a)where the precision of the measuring means is related to its displacement relative to the exposing head in a focusing direction of the exposing head.

2. An image recording apparatus (2) according to claim 1, wherein the correction reference exposure light amounts are exposure light amounts measured by the exposure measuring means (6a) immediately after the exposing head (5a) performs an exposure with exposure light amounts corrected in advance by the exposure correcting means (5d) based on an image density of the image recorded on the photosensitive material (4).

3. An image recording apparatus (2) according to any of claims 1 to 2, wherein the exposure correcting means (5d) corrects the exposure light amounts of the respective light output portions such that the exposure light amounts measured by the exposure measuring means (6a) agree with the correction reference exposure light amounts stored in the storage means (5e).

4. An image recording apparatus (2) according to any of claims 1 to 3, wherein the exposing head (5a) comprises a PLZT device.

5. A method for recording an image on a photosensitive material (4) using an image recording apparatus (2) comprising an exposure correcting means (5d) for correcting exposure light amounts of respective light output portions of an exposing head (5a) thereof, the method comprising the following steps:
acquiring correction value data for correcting exposure light amounts of the respective light output portions to correspond to predetermined optimum exposure light amounts;
adjusting the exposure correcting means (5d) in accordance with the correction value data;
measuring basic exposure light amounts of the respective light output portions using an exposure measuring means (6a) incorporated into the image recording apparatus in a position opposite to the exposing head (5a), **characterized in that**:
the correction value data is obtained by:
performing a first exposure correction using measurement results obtained by scanning a finished print using a high-precision original scanner installed outside the image recording apparatus;
acquiring and storing, as the correction value data, correction reference exposure light amounts for the respective light output portions measured by the exposure measuring means immediately after the first exposure correction;
setting the correction reference exposure light amounts according to the precision of the exposure measuring means, where the precision of the measuring means is related to its displacement relative to the exposing head in a focusing direction of the exposing head;
one or more images are recorded on the photosensitive material, wherein the exposure measuring means (6a) has a precision lower than said exposing head (5a) and the exposure light amounts are adjusted in accordance with a comparison of the previously measured basic exposure light amounts with the correction reference exposure light amounts.

6. A method according to claim 5, wherein the correction value data are determined in accordance with a measured image density of the image recorded on the photosensitive material (4).

7. A method according to claim 6, wherein the image density is measured using a high-precision original scanner installed outside the image recording apparatus (2), preferably at a manufacturer.

8. A method according to any of claims 6-7, wherein the correction reference exposure light amounts are basic exposure light amounts measured by the exposure measuring means (6a).

9. A method according to any of claims 6-8, wherein after completion of steps (a) to (d), only step (e) is repeated for recording further images on the photosensitive material (4), and step (d) is repeated as required from time to time for newly measuring basic exposure light amounts.

## Patentansprüche

1. Bildaufzeichnungsgerät (2) zum Aufzeichnen eines Bilds auf einem photoempfindlichen bzw. lichtempfindlichen Material (4), welches nicht in Kontakt mit einem Belichtungskopf (5a) ist, indem Lichtausgabebereiche bzw. -abschnitte des Belichtungskopfs (5a) in Übereinstimmung mit einem Bildsignal angetrieben werden, um die Lichtübertragung zu steuern bzw. zu regeln, umfassend:
Belichtungsmeßmittel (6a), die in einer Position gegenüberliegend dem Belichtungskopf (5a) angeordnet sind, um Belichtungslichtmengen der entsprechenden Lichtausgabeabschnitte zu messen, und
Belichtungskorrekturmittel (5d) zum Korrigieren der Belichtungslichtmengen der entsprechenden Lichtausgabeabschnitte, **gekennzeichnet durch**
Speichermittel (5e) zum Speichern von Korrekturreferenz-Belichtungslichtmengen, die **durch** die Belichtungsmeßmittel unmittelbar nach einer ersten Belichtungskorrektur gemessen wurden, wobei die erste Belichtungskorrektur **durch** die Belichtungskorrekturmittel unter Verwendung von Meßergebnissen durchgeführt sind, die **durch** Abtasten bzw. Scannen eines fertigen Drucks unter Verwendung eines Hochpräzisions-Originalscanners erhalten werden, der außerhalb der Bildaufzeichnungsvorrichtung angeordnet ist,
worin die Belichtungskorrekturmittel (5d) die Belichtungslichtmengen der entsprechenden Lichtausgabeabschnitte basierend auf einem Vergleich der Belichtungslichtmengen, die **durch** die Belichtungsmeßmittel (6a) gemessen sind, mit den Korrekturreferenz-Belichtungslichtmengen korrigieren, die in den Speichermitteln (5e) gespeichert sind, und
worin die Belichtungsmeßmittel (6a) eine Präzision niedriger als jene des Belichtungskopfs (5a) aufweisen und die Korrekturreferenz-Belichtungslichtmengen entsprechend der Präzision der Belichtungsmeßmittel (6a) festgelegt sind, wobei die Präzision der Meßmittel in bezug auf ihre Verlagerung relativ zu dem Belichtungskopf in einer Fokussierrichtung des Belichtungskopfs bezogen sind.

2. Bildaufzeichnungsgerät (2) nach Anspruch 1, worin die Korrekturreferenz-Belichtungslichtmengen Belichtungslichtmengen sind, die durch die Belichtungsmeßmittel (6a) gemessen sind, unmittelbar nachdem der Belichtungskopf (5a) eine Belichtung mit Belichtungslichtmengen durchführt, welche im voraus durch die Belichtungskorrekturmittel (5d) basierend auf einer Bilddichte des auf dem photoempfindlichen Material (4) aufgezeichneten Bilds korrigiert sind.

3. Bildaufzeichnungsgerät (2) nach einem der Ansprüche 1 oder 2, worin die Belichtungskorrekturmittel (5d) die Belichtungslichtmengen der entsprechenden Lichtausgabeabschnitte derart korrigieren, daß die Belichtungslichtmengen, die durch die Belichtungsmeßmittel (6a) gemessen sind, mit den Korrekturreferenz-Belichtungslichtmengen, die in den Speichermitteln (5e) gespeichert sind, übereinstimmen.

4. Bildaufzeichnungsgerät (2) nach einem der Ansprüche 1 bis 3, worin der Belichtungskopf (5a) eine PLZT-Vorrichtung umfaßt.

5. Verfahren zum Aufzeichnen eines Bilds auf einem lichtempfindlichen bzw. photoempfindlichen Material (4) unter Verwendung eines Bildaufzeichnungsgeräts (2), umfassend Belichtungskorrekturmittel (5d) zum Korrigieren von Belichtungslichtmengen von entsprechenden Lichtausgabeabschnitten eines Belichtungskopfs (5a) derselben, wobei das Verfahren die folgenden Schritte umfaßt:
Erhalten von Korrekturwertdaten zum Korrigieren von Belichtungslichtmengen der entsprechenden Lichtausgabeabschnitte, um mit vorbestimmten, optimalen Belichtungslichtmengen übereinzustimmen;
Einstellen der Belichtungskorrekturmittel (5d) in Übereinstimmung mit den Korrekturwertdaten;
Messen von Basisbelichtungslichtmengen der entsprechenden Lichtausgabeabschnitte unter Verwendung von Belichtungsmeßmitteln (6a), die in dem Bildaufzeichnungsgerät in einer Position gegenüberliegend zu dem Belichtungskopf (5a) aufgenommen bzw. inkorporiert sind, **gekennzeichnet dadurch, daß**:
die Korrekturwertdaten erhalten werden durch:
Durchführen einer ersten Belichtungskorrektur unter Verwendung von Meßergebnissen, die durch ein Abtasten bzw. Scannen eines fertigen Drucks unter Verwendung eines Hochpräzisions-Originalscanners erhalten werden, der außerhalb des Bildaufzeichnungsgeräts angeordnet ist;
Erhalten und Speichern, als die Korrekturwertdaten, von Korrekturreferenz-Belichtungslichtmengen für die entsprechenden Lichtausgabeabschnitte, die durch die Belichtungsmeßmittel unmittelbar nach der ersten Belichtungskorrektur gemessen werden;
Festlegen der Korrekturreferenz-Belichtungslichtmengen gemäß der Präzision der Belichtungsmeßmittel, worin die Präzision der Meßmittel zu ihrer Verlagerung relativ zu dem Belichtungskopf in einer Fokussierrichtung des Belichtungskopfs in bezug gebracht wird;
eines oder mehrere Bild(er) auf dem photoempfindlichen Material aufgezeichnet wird bzw. werden, worin die Belichtungsmeßmittel (6a) eine niedrigere Präzision als der Belichtungskopf (5a) aufweisen und die Belichtungslichtmengen in Übereinstimmung mit einem Vergleich der zuvor gemessenen Basisbelichtungslichtmengen mit den Korrekturreferenz-Belichtungslichtmengen eingestellt werden.

6. Verfahren nach Anspruch 5, worin die Korrekturwertdaten in Übereinstimmung mit einer gemessenen Bilddichte des auf dem photoempfindlichen Material (4) aufgezeichneten Bilds bestimmt werden.

7. Verfahren nach Anspruch 6, worin die Bilddichte unter Verwendung eines Hochpräzisions-Originalscanners gemessen wird, der außerhalb des Bildaufzeichnungsgeräts (2) vorzugsweise bei einem Hersteller installiert wird.

8. Verfahren nach einem der Ansprüche 6 - 7, worin die Korrekturreferenz-Belichtungslichtmengen Basisbelichtungslichtmengen sind, die durch die Belichtungsmeßmittel (6a) gemessen werden.

9. Verfahren nach einem der Ansprüche 6 - 8, worin nach Vervollständigung der Schritte (a) bis (d) nur Schritt (e) für ein Aufzeichnen von weiteren Bildem auf dem photoempfindlichen Material (4) wiederholt wird und Schritt (d), sofern erforderlich, von Zeit zu Zeit wiederholt wird, um Basisbelichtungslichtmengen neu zu messen.

## Revendications

1. Appareil d'enregistrement d'image (2) pour enregistrer une image sur une matière photosensible (4), qui n'est pas en contact avec une tête d'exposition (5a), par commande des éléments de sortie de lumière de la tête d'exposition (5a) conformément à un signal d'image pour régler la transmission de lumière, comprenant :
un moyen de mesure d'exposition (6a) prévu dans une position en face de la tête d'exposition (5a) pour mesurer les quantités de lumière d'exposition des éléments de sortie de lumière respectifs, et
un moyen de correction d'exposition (5d) pour corriger les quantités de lumière d'exposition des éléments de sortie de lumière respectifs,
**caractérisé par** :
un moyen de stockage (5e) pour stocker des quantités de lumière d'exposition de référence de correction mesurées par le moyen de mesure d'exposition immédiatement après une première correction d'exposition, cette première correction d'exposition étant effectuée par le moyen de correction d'exposition en utilisant les résultats de mesure obtenus par balayage d'une impression finie au moyen d'un dispositif de balayage d'origine de haute précision installé en dehors de l'appareil d'enregistrement d'image,
dans lequel le moyen de correction d'exposition (5d) corrige les quantités de lumière d'exposition des éléments de sortie de lumière respectifs sur la base d'une comparaison des quantités de lumière d'exposition mesurées par le moyen de mesure d'exposition (6a) avec les quantités de lumière d'exposition de référence de correction stockées dans le moyen de stockage (5e), et
dans lequel le moyen de mesure d'exposition (6a) a une précision plus faible que la dite tête d'exposition (5a) et les quantités de lumière d'exposition de référence de correction sont établies en fonction de la précision du moyen de mesure d'exposition (6a), la précision du moyen de mesure étant liée à son déplacement par rapport à la tête d'exposition dans une direction de focalisation de la tête d'exposition.

2. Appareil d'enregistrement d'image (2) selon la revendication 1, dans lequel les quantités de lumière d'exposition de référence de correction sont des quantités de lumière d'exposition mesurées par le moyen de mesure d'exposition (6a) immédiatement après l'exécution par la tête d'exposition (5a) d'une exposition avec des quantités de lumière d'exposition corrigées préalablement par le moyen de correction d'exposition (5d) sur la base d'une densité d'image de l'image enregistrée sur la matière photosensible (4).

3. Appareil d'enregistrement d'image (2) selon une quelconque des revendications 1 et 2, dans lequel le moyen de correction d'exposition (5d) corrige les quantités de lumière d'exposition des éléments de sortie de lumière respectifs de sorte que les quantités de lumière d'exposition mesurées par le moyen de mesure d'exposition (6a) concordent avec les quantités de lumière d'exposition de référence de correction stockées dans le moyen de stockage (5e).

4. Appareil d'enregistrement d'image (2) selon une quelconque des revendications 1 à 3, dans lequel la tête d'exposition (5a) comprend un dispositif PLZT.

5. Procédé pour l'enregistrement d'une image sur une matière photosensible (4) au moyen d'un appareil d'enregistrement d'image (2) comprenant un moyen de correction d'exposition (5d) pour corriger les quantités de lumière d'exposition des éléments de sortie de lumière respectifs de sa tête d'exposition (5a), le procédé comprenant les étapes suivantes :
acquisition de données de valeur de correction pour corriger les quantités de lumière d'exposition des éléments de sortie de lumière respectifs de sorte qu'elles correspondent à des quantités de lumière d'exposition optimales prédéterminées ;
réglage du moyen de correction d'exposition (5d) conformément aux données de valeur de correction ;
mesure de quantités de lumière d'exposition de base des éléments de sortie de lumière respectifs par utilisation d'un moyen de mesure d'exposition (6a) incorporé dans l'appareil d'enregistrement d'image dans une position en face de la tête d'exposition (5a) ;
**caractérisé en ce que** les données de valeur de correction sont obtenues par :
exécution d'une première correction d'exposition par utilisation des résultats de mesure obtenus par balayage d'une impression finie au moyen d'un dispositif de balayage d'origine de haute précision installé en dehors de l'appareil d'enregistrement d'image ;
acquisition et stockage, comme données de valeur de correction, des quantités de lumière d'exposition de référence de correction pour les éléments de sortie de lumière respectifs, mesurées par le moyen de mesure d'exposition immédiatement après la première correction d'exposition ;
établissement des quantités de lumière d'exposition de référence de correction en fonction de la précision du moyen de mesure d'exposition, lorsque la précision du moyen de mesure est liée à son déplacement par rapport à la tête d'exposition dans une direction de focalisation de la tête d'exposition ;
une ou plusieurs images sont enregistrées sur la matière photosensible ;
dans lequel le moyen de mesure d'exposition (6a) a une précision plus faible que la dite tête d'exposition (5a), et les quantités de lumière d'exposition sont ajustées conformément à une comparaison des quantités de lumière d'exposition de base précédemment mesurées avec les quantités de lumière d'exposition de référence de correction.

6. Procédé selon la revendication 5, dans lequel les données de valeur de correction sont déterminées conformément à une densité d'image mesurée de l'image enregistrée sur la matière photosensible (4).

7. Procédé selon la revendication 6, dans lequel la densité d'image est mesurée au moyen d'un dispositif de balayage d'origine de haute précision installé en dehors de l'appareil d'enregistrement d'image (2), de préférence chez un fabricant.

8. Procédé selon une quelconque des revendications 6 et 7, dans lequel les quantités de lumière d'exposition de référence de correction sont des quantités de lumière d'exposition de base mesurées par le moyen de mesure d'exposition (6a).

9. Procédé selon une quelconque des revendications 6 à 8, dans lequel, après achèvement des étapes (a) à (d), seule l'étape (e) est répétée pour enregistrement d'autres images sur la matière photosensible (4), et l'étape (d) est répétée comme nécessaire de temps en temps pour une nouvelle mesure des quantités de lumière d' exposition de base.
